# EUROPEAN PATENT APPLICATION

(11) **EP 1 207 480 A2**
(43) Date of publication of application: **22.05.2002**
(21) Application number: 01302943.4
(22) Date of filing: 29.03.2001
(51) Int. Cl.: G06F 17/60

(54) **Membership information retrieval server, user terminal, message-sending terminal, and method for retrieving membership information and for sending message**

(30) Priority: 17.11.2000 JP 2000351910
(71) Applicant: Square Co., Ltd., Tokyo 153-8688 (JP)
(72) Inventor: Maehiro, Kazutoyo, c/o Square Co., Ltd., Meguro-ku, Tokyo 153-8688 (JP)
(74) Representative: Musker, David Charles

(57) **Abstract**

A method for sending messages having the same contents to a group of users retrieved on the network is provided. The user sends retrieval requests from a user terminal (103a, 103b, 104a, or 104b) to a profile server (115). The profile server (105) retrieves other users in response to the retrieval request. Then, the profile server (105) sends the retrieval results to the user terminal (103a, 103b, 104a, or 104b). The user selects one or more users from the retrieval results to send messages to the selected users. The selected users are pooled in a list of destinations. The user sends an input message to each of the pooled users from the user terminal (103a, 103b, 104a, or 104b).

## Description

The present invention relates to a membership information retrieval server, a user terminal, a message-sending terminal, a method for retrieving membership information and a method for sending a message. In particular, the present invention relates to sending a message to a group of users that satisfy the predetermined conditions.

In the well-known method for sending an electronic mail (i.e., e-mail) from one end to another, the e-mail may be transmitted to a communications server of the service provider where a user on the receiving side has his or her own mail account through the Internet. The user on the receiving side performs an IP (Internet Protocol) connection using a dial-up service to access the communications server of the service provider from the user's client. Subsequently, the mail sent to the user's account (i.e., mail address) is imported to the client, so that the user is able to check and read the e-mail.

In the conventional e-mail system that performs the above steps, the user's client may execute programs (i.e., mail software) to be used for preparing and sending e-mails, importing e-mails from the communications server, and displaying the imported e-mails on a screen. The mail software may be "Microsoft (R) Outlook (R) 2000" (Microsoft Corp. USA) or the like. Among the features of such mail software, an address book feature is typically known in the art. The address book is one of the software programs, which store at least the name and address information in the client to be referred to by the mail software.

The user who uses the mail software may select at least one mail address from the address book and then the user may send a mail to the selected mail address or the same mail to the selected mail addresses.

In the conventional e-mail system, however, there is no function to concurrently send mails to some of the clients of users who satisfy particular conditions (e.g., the conditions of users playing the same online game together on a network) through the network. Therefore, there is a necessity to provide a method for concurrently sending the same messages to a group of users that satisfy the specific conditions among all or part of the users being connected to the network.

Therefore, an object of the present invention is to provide a membership information retrieval server, a user terminal, a message-sending terminal, a method for retrieving membership information and a method for sending a message, which retrieve a specific user on the network and send messages with the same contents on the basis of the retrieval results.

In a first aspect of the present invention, for attaining the above object, there is provided a membership information retrieval server that includes a storage device for receiving the membership information from a group of users and storing the membership information therein. The server also includes, a retrieval system that extracts the membership information from the storage device on the basis of the retrieval conditions to be sent from one of the user terminals; and a communications system that sends the membership information extracted by the retrieval system to the user terminal from which the retrieval conditions are sent.

Therefore, the user is allowed to retrieve the members on the network, and to send messages having the same contents to the members on the basis of the results of retrieval.

In the first aspect of the present invention, the membership information retrieval server may further include a determination system that determines whether each of the user terminals is currently online. The communications server imports the determination results into the membership information and then sends the membership information to the user terminal. Therefore, the user is allowed to keep track of the online status of the members receiving the services of message-sending, with reference to the information extracted on the basis of the retrieval conditions.

In the first aspect of the present invention, the membership information may include a user name of the member and the information entered into and sent from the user terminal. Therefore, the retrieval server collects the membership information from each user terminal, while each user terminal retrieves the member on the basis of the collected information.

In the first aspect of the present invention, the information sent to the retrieval server may include text information. Therefore, the retrieval server collects text data from each user terminal and each user terminal accesses the retrieval server to retrieve the member on the basis of the text data.

Here, the retrieval conditions may include character strings, so that retrieval system extracts the membership information on the basis of the character string and the text information included in the membership information. Therefore, a group of users that satisfy the conditions may be retrieved from the users being connected to the network.

In the first aspect of the present invention, the membership information stored in the storage device may be updated whenever necessary from the user terminal that is online. Therefore, each member may be capable of entering the text data required for each user to be retrieved from other users in the retrieval server using the user terminal whenever necessary.

In a second aspect of the present invention, there is provided a user terminal capable of accessing the membership information retrieval server as described above. The user terminal includes: a first sending system that enters retrieval conditions and sends the retrieval conditions to the retrieval server; a display that displays the membership information sent from the retrieval server. The terminal further includes, a creation system that accepts the selection of at least one member from the members in the membership information displayed by the display and creates a temporary user list that includes membership information about at least one selected member. The terminal further includes, a first acceptance system that accepts the entry of a message to be sent to a user terminal to be used by at least one member listed in the temporary user list; and a second sending system that sends the message accepted by the first acceptance system to the user terminal to be used by at least one member listed in the temporary user list.

Therefore, the user is allowed to find out the user terminals to be used by the member that satisfy the predetermined conditions among the whole or part of the user terminals being connected to the network to send messages having the same contents to them.

In a third aspect of the present invention, a message-sending terminal includes: a first creation system that creates a first user list that includes membership information with respect to a group of members; and a second creation system that displays one or more members included in the first user list created by the first creation system, accepting the selection of at least one member from the members in the first user list, and creating a second user list that includes membership information about at least one selected member. The terminal also includes a second acceptance system that accepts the entry of a message from an input system; and a sending system that sends the message accepted by the second acceptance system to at least one user terminal to be used by at least one selected member in the second user list. Therefore, the temporary user list can be easily prepared on the basis of the user list already entered in the user terminal.

In a fourth aspect of the present invention, a method for sending a message includes receiving membership information about members sent from a group of user terminals by a server and storing the membership information in a storage device in the server. The method further includes, sending retrieval conditions of the members to the server from one of the group of user terminals; extracting the membership information from the storage device on the basis of the retrieval conditions by the server and sending the extracted membership information to the user terminal that sent the retrieval conditions. The method further includes displaying the membership information sent from the server on a display of the user terminals, accepting the selection of one or more members included in the displayed membership information to create a temporary user list that includes the membership information about the one or more accepted members; and sending a message entered in the user terminal to the one or more members in the created temporary user list. Therefore, the user terminal confirms the present situation of the receiving side displayed on the pool window and the information window.

In a fifth aspect of the present invention, a method is provided for retrieving membership information by accepting retrieval conditions from a group of user terminals and retrieving information about members. The method includes receiving membership information about the members sent from a group of user terminals and storing the membership information in a storage device in the server. The method also includes extracting the stored membership information on the basis of the retrieval conditions to be sent from one of the user terminals; and sending the extracted membership information from the server to the user terminals that sent the retrieval conditions. Therefore, the user terminal may send the messages to a group of members, respectively, by one packet sending, while the messages can be sent to the nodes that require the message-sending, only incurring minimum load on the network.

In the fifth aspect of the present invention, furthermore, the method for retrieving membership information as described above further includes determining whether each of the user terminals is online. The server sends the membership information and the determination results. Therefore, the user is allowed to keep track of the online status of the members extracted on the basis of the retrieval conditions.

In the fifth aspect of the present invention, the membership information may include a user name of the member and the information that is entered in the user terminals and sent from the user terminals to the retrieval server. Therefore, the retrieval server collects the membership information from each user terminal, while each user terminal retrieves the member on the basis of the collected information.

In the fifth aspect of the present invention, the transmitted information may include text. Therefore, the retrieval server collects the text data from each of the user terminals and the retrieval server may be requested from each user terminal to retrieve the member on the basis of the text data. In this case, the retrieval conditions may include character strings, so that the server extracts the membership information on the basis of the text and the character strings included in the membership information. Therefore, the method for retrieving the user terminals to be used by a group of users that satisfy the predetermined conditions from the user terminals connected to the network can be realized.

In the fifth aspect of the present invention, the membership information to be stored in the storage device can be updated whenever necessary from the user terminal that is online. Therefore, the method for entering the text data in the retrieval server can be realized at any time using the user terminal, where the text data may be required for each member to be retrieved from the other members.

In a sixth aspect of the present invention, there is provided a method for message sending performed on a user terminal that accesses the retrieval server described above. The method includes: sending the retrieval conditions entered by the input system of the user terminal to the retrieval server; displaying the membership information sent from the retrieval server on display; and accepting the selection of at least one member from the members in the displayed membership information on the display and creating a temporary user list that includes membership information about the selected member. The method also includes accepting the entry of a message to be sent to a user terminal to be used by at least one member listed in the temporary user list; and sending the accepted message. Therefore, the method can send the same message, where the user terminals to be used by the member that satisfy the predetermined conditions is found from the whole or part of the user terminals being connected to the network to send the messages having the same contents to them.

In a seventh aspect of the present invention, there is provided a method for sending a message, including: creating a first user list that includes membership information with respect to a group of members; displaying one or more members included in the first user list, accepting the selection of at least one member from the members in the first user list, and then creating a second user list that includes membership information about at least one selected member. The method also includes accepting the entry of a message from input; and sending the accepted message to at least one user terminal to be used by at least one selected member in the second user list. Therefore, the method allows the temporary user list to be easily prepared from the user list which is already prepared in the user terminal.

In an eighth aspect of the present invention, there is provided a recording medium, including a readable program being stored thereof. The program is capable of: receiving membership information about members sent from a group of user terminals to store in a storage device of a server; sending retrieval conditions of the members to the server from one of the user terminals; and extracting the membership information from the storage device on the basis of the retrieval conditions by the server and sending the extracted membership information to the user terminal that sent the retrieval conditions. The program also displays the membership information sent from the server on a display of the user terminals, accepts the selection of one or more members included in the displayed membership information to create a temporary user list that includes the membership information about the one or more accepted members; and sends a message entered in the user terminal to the one or more members in the created temporary user list.

In a ninth aspect of the present invention, there is provided a computer program for bringing a server into operation based on a method that includes receiving membership information about members sent from user terminals to store in a storage device of a server. It also includes sending retrieval conditions of the members to the server from one of the user terminals; extracting the membership information from the storage device on the basis of the retrieval conditions by the server and sending the extracted membership information to the user terminal that sent the retrieval conditions. The program also displays the membership information sent from the server on a display of the user terminals, accepts the selection of one or more members included in the displayed membership information to create a temporary user list that includes the membership information about the one or more accepted members; and sends a message entered in the user terminal to the one or more members in the created temporary user list.

Therefore, it becomes possible to execute the computer program capable of sending messages with the same contents on the basis of the results in retrieval of the user terminals on the network.

In addition, user may retrieve the members on the network, and then send messages with the same contents on the basis of the results of such retrieval.

The above and other objects, features and advantages of the present invention will become more apparent from the following description of embodiments thereof taken in conjunction with the accompanying drawings.
Fig. 1 is a schematic diagram that illustrates an example of the system configuration in accordance with one of the preferred embodiments of the present invention;
Fig. 2 is a block diagram that illustrates an example of the hardware configuration of the computer to be used as a profile server or a user terminal;
Fig. 3 is flow chart that illustrates the steps of the method for message-sending in accordance with one of the preferred embodiments of the present invention;
Fig. 4 is a schematic diagram that illustrates an example of membership information stored in the profile server;
Fig. 5 is a schematic diagram that illustrates an example of screen of retrieval results displayed on the user terminal;
Fig. 6 is a schematic diagram that illustrates an example of screen of a subcommand entry menu displayed on the user terminal;
Fig. 7 is a schematic diagram that illustrates an example of an information window represented on the subcommand entry menu;
Fig. 8 is a schematic diagram that illustrates an example of a subcommand window represented on the subcommand entry menu;
Fig. 9 is a schematic diagram that illustrates an example of pool window represented on the subcommand entry menu;
Fig. 10 is a schematic diagram that illustrates an example of a message input menu displayed on the user terminal;
Fig. 11 is a schematic diagram that illustrates an example of a warning window displayed on the user terminal;
Fig. 12 is a schematic diagram that illustrates an example of prepared user list displayed on the user terminal; and
Fig. 13 is a schematic diagram that illustrates an example of screen on which pool and subcommand windows are stacked on the screen of the user.

### (First Embodiment)

Referring now to the attached figures, we will describe preferred embodiments of the present invention in detail.

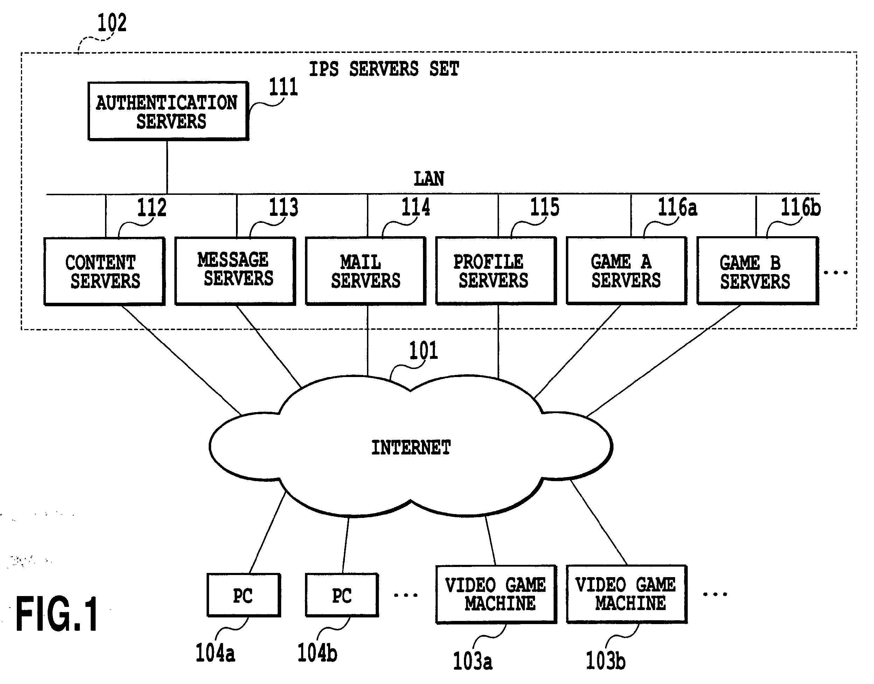

Fig. 1 shows an example of a system configuration on which a method for message-sending in accordance with the present invention is applied. As shown in the figure, an Internet 101 is connected to a servers set 102 of an Internet Service Provider (ISP), video game machines 103a and 103b, and general-purpose computers 104a and 104b. The ISP servers set 102 includes the following servers. That is, there are authentication servers 111 for administrating accounts of users to validate each user; content servers 112 for providing clients with a service for browsing various content such as voice data and motion pictures; message servers 113 for providing clients with the environments of allowing exchange messages across the Internet using chat and messenger applications; mail servers 114 for providing clients with electronic mail service; profile servers 115 for managing user profiles; and amusement servers 116a, 116b for providing clients with the environments of online games. In the ISP servers set 102, these servers are interconnected with each other through a communications line of local area network (LAN).

Depending on such a configuration, the user is permitted to get his or her authentication by accessing the authentication servers 111 in the servers set 102. The servers set 102 sends a menu screen to the authenticated client. Then, the user makes a choice among several alternative services displayed on the menu screen, resulting in a connection to appropriate servers in response to the service required by one of the video game machines 103a, 103b and the general-purpose computers 104a, 104b. Consequently, the user can be allowed to receive various information services.

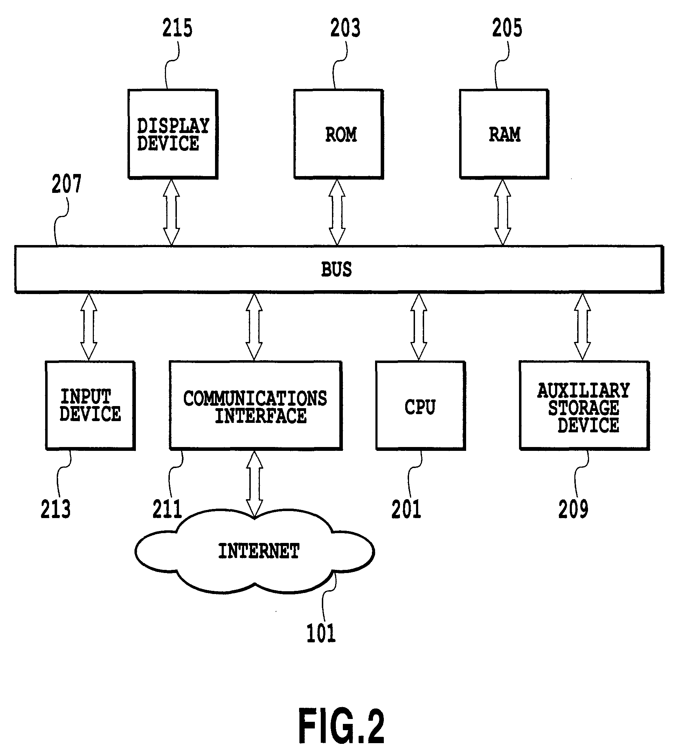

Fig. 2 illustrates an example of hardware configuration of the computer system to be used as the video game machine 103a or 103b or the general-purpose computer 104a or 104b(hereinafter, referred to as "a user terminal"). The user terminal includes a central processing unit (CPU) 201 and a random access memory (RAM) 205. Both the CPU 201 and the RAM 205 connect to an auxiliary storage device 209 and a read only memory (ROM) 203 through a bus 207. The auxiliary storage device 209 may be selected from a hard disk drive, a CD-ROM, a digital video disk (DVD), or the like.

Recording media, such as the auxiliary storage device 209, ROM 203, and so on store computer programs and data. In this case, the computer programs are responsible for providing the CPU 201 and the like with the predetermined commands loaded on the RAM 205 to retrieve membership information with respect to the present embodiment and to send or receive messages, or the like. The above data is to be entered in a database provided as an assembly of files.

In the case of a profile server 115, for example, membership information to be described later and retrieval programs for retrieving the membership information are recorded into the recording media.

In the case of a user terminal such as a personal computer (PC) or a video game machine, it has programs such as a mail software for sending messages, a program for requesting the profile server 115 to retrieve users, and a program for selecting users on the basis of the retrieval results, or the like.

A communications interface 211 is connected to the bus 207, for example which is capable of using an Integrated Services Digital Network (ISDN) card or a modem that allows a data communications connection to the Internet 101.

A display device 215 may be for example a liquid crystal display (LCD) or a cathode-ray tube (CRT). An input device 213 is provided for the input of characters and numbers, which may be a keyboard, a pointing device such as a mouse or a track ball, or the like. As shown in the figure, these components connect to one another through the bus 207.

The present invention can be outlined as follows. From the user terminal, the user sends a request to retrieve membership information to the profile server 115. The profile server 115 starts to retrieve profiles of the respective members in response to the retrieval request from the user terminal and then sends the retrieval results of the membership information to the user terminal. The retrieval results of the membership information may be displayed on a display of the user terminal. The user selects one or more members from those included in the membership information of the retrieval results. The information (e.g., user name and e-mail address) of each selected member is listed in a temporary list of destinations. Then, the user terminal distributes an input message to each of the users having their respective destination addresses pooled in the user terminal.

In the following description, the system operation of the present embodiment will be described in detail. In the following description, the term "pool" means that the member is registered in a temporary registration list, and also the term "pool list" denotes such a temporary registration list in which the members are pooled.

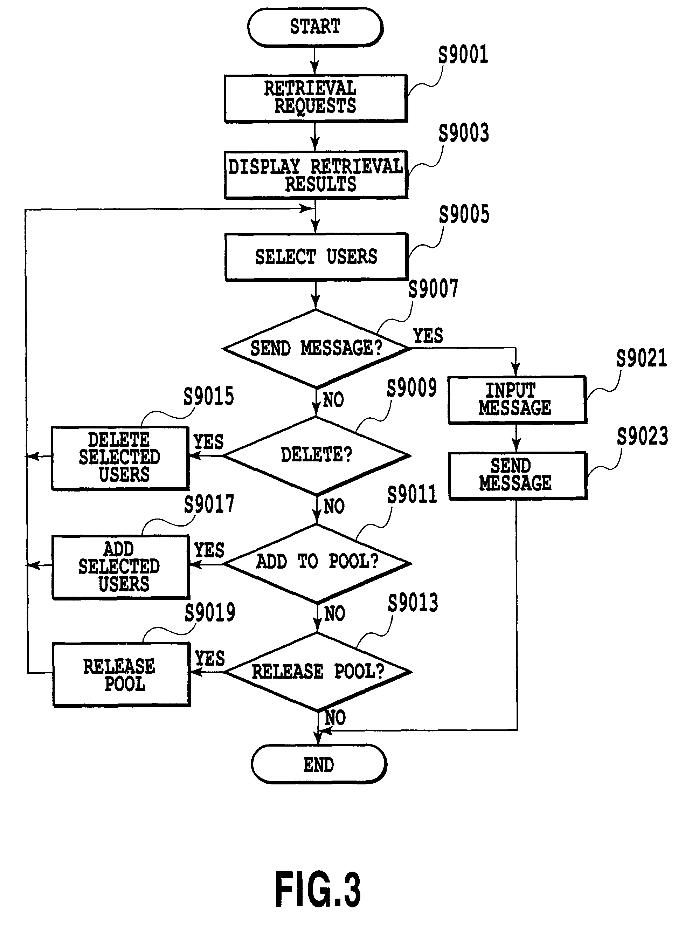

Fig. 3 shows message-sending service as one of the information services to be provided in accordance with the present embodiment. If a user terminal of one specific user accesses the profile server 115, in this embodiment, the user may obtain the information of other members from the profile server 115. Then, the user may send a message to at least one member selected on the basis of the obtained information. For obtaining such membership information, the retrieval procedure is used in the present embodiment. That is, the user (i.e., one of the members) provides the profile server 115 with any retrieval conditions (e.g., any word or phrase) corresponding to any other member to which the user desires to send a message. Thus, the user terminal sends the retrieval request to the profile server 115, where the retrieval request includes the retrieval conditions of the member to which the user desires to send a message (step S9001). If the user wants to retrieve any member having membership information with a character string of "RPG", such a character string may be provided as a retrieval condition to be sent to the profile server 115.

If the profile server 115 receives the retrieval request from the user terminal, then the profile server 115 starts to extract the membership information on the basis of the received character string.

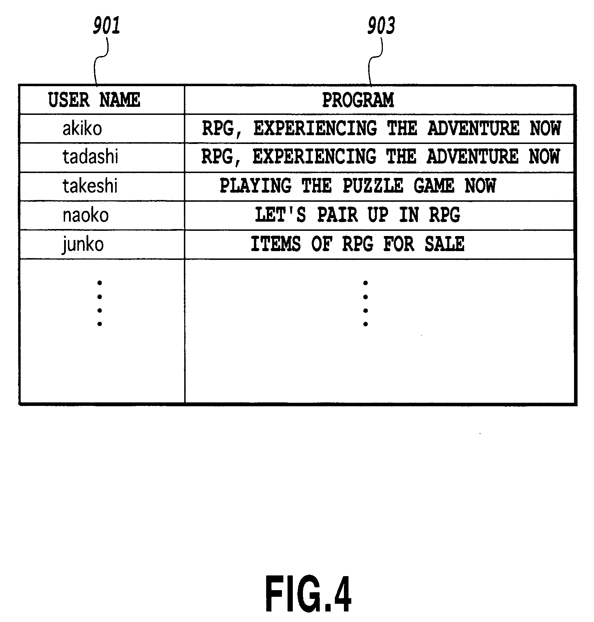

Fig. 4 shows an example of membership information being stored in the profile server 115. As shown in Fig. 4, a user name 901 corresponds to a name of the member who receives the information service. The user name 901 may be entered at the time of membership registration of such a service. In addition, a profile 903 indicates any information concerned about the registrant to be entered from the user terminal. The profile 908 can be updated from the user terminal, in case of necessity, according to the user's circumstances (e.g., the user is playing a role playing game (RPG) or another game or looking out new playmates).

In the example shown in Fig. 4, the user name "akiko" corresponds to the profile "RPG, experiencing the adventure now", the user name "takeshi" corresponds to "playing the puzzle game now", and so on.

The profile server 115 retrieves its database by examining out the retrieval condition (i.e., in this case, the character string received from the user terminal) against the user's profiles 903 in the database. Then, the profile server 115 extracts the membership information having the profile 903 with the same character string as that received from the user terminal. In addition, the profile server 115 determines whether each of the user terminals corresponding to the extracted membership information is on the network or not. The profile server 115 sends the retrieval results as data to be displayed on a screen to the requesting user terminal so that the user finds the retrieval results on the display screen (step S9003). It is noted that the retrieval results include the results of the above determination whether the target is on the network or not.

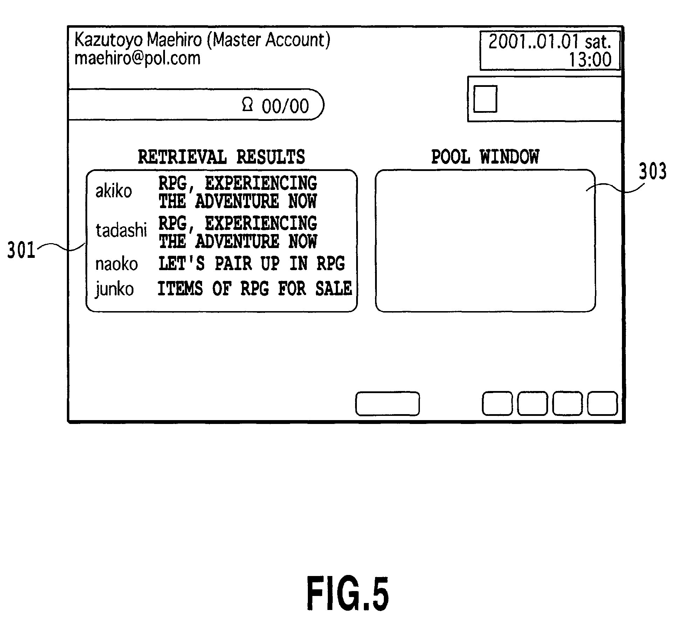

Referring now to Fig. 5, there is shown an example of the retrieval results on a screen displayed on the user terminal that received the retrieval results at step S9003 in Fig. 3. The screen representing the retrieval results contains the retrieval-resulting membership information 301 including user names and their respective profiles and a pool window 303 for temporarily pooling members being selected from the membership information 301. The contents of the pool window 303 represented on the screen will be described later.

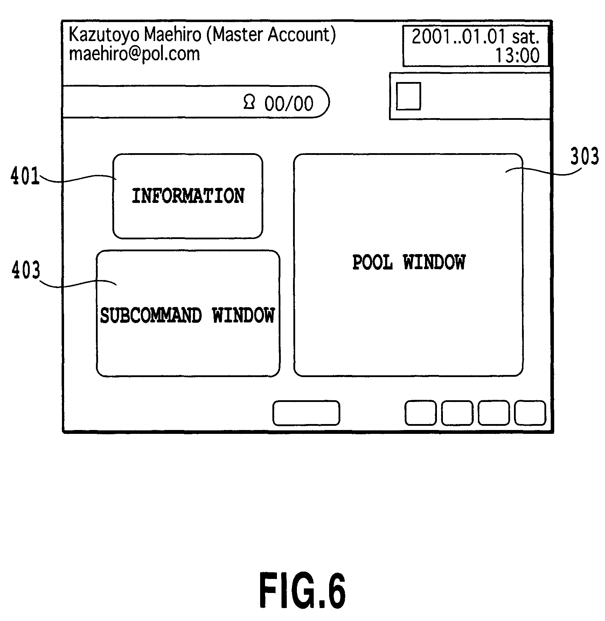

If the user puts the cursor on one user name in the membership information 301 to make it active, the user terminal is allowed to get the detailed information about the corresponding user from the profile server 115 or the like. Then, the user terminal displays a screen of subcommand entry menu as shown in Fig. 6 for accepting the selection of members to be pooled (step S9005).

As shown in Fig. 6, the subcommand entry menu screen includes an information window 401 for representing information, a subcommand window 403 for receiving the entry of subcommands, and a pool window 303 for representing a pool list.

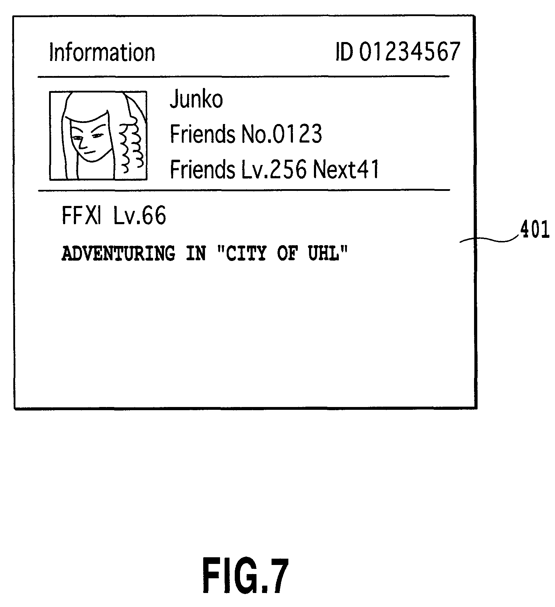

One example of an image to be represented on the information window is shown in Fig. 7. As shown in the figure, the information window 401 displays the detailed information such as histories and profiles of the members obtained from the profile server 115 or the like with respect to those selected on the screen of the retrieval results.

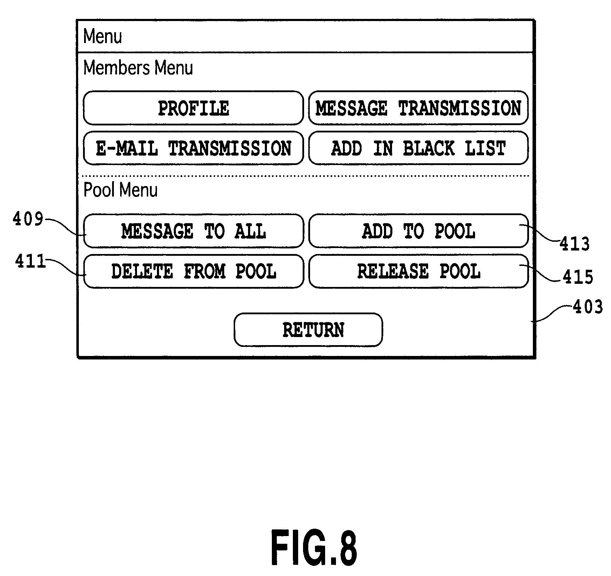

Fig. 8 is an example of the subcommand window. As shown in the figure, the subcommand window 403 includes a sending button 409 to be pushed down at the time of distributing the same message to all of the pooled members, a delete button 411 to be pushed down at the time of deleting the user from the pool list, an addition button 413 to be pushed down when adding an additional member selected on the screen of the retrieval results, and a release button 415 to be pushed down when removing the temporary user list stored in a storage device.

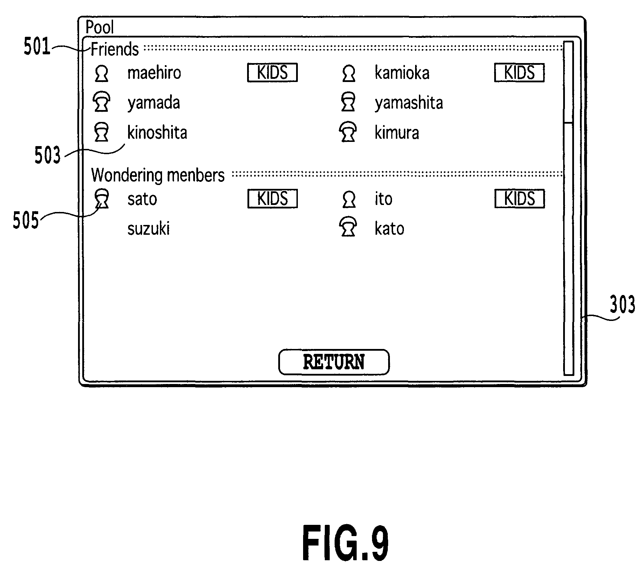

Fig. 9 is an example of the pool window. In the figure, the pool window 303 displays online status, for example "online" (being connected to the network), "capturing" (transferring received data into a file for archiving or later analysis), and "offline" (being disconnected from the network), by means of distinguishable icons 505 and user names 503 used by the user.

Next, we will describe the procedure to be performed on the user terminal when each subcommand button is selected from the subcommand window shown in Fig. 8.

If the sending button 409 is selected from the subcommand window shown in Fig. 8 (i.e., the process proceeds from the step S9007 to the step S9021 via a "YES" route in Fig. 3).

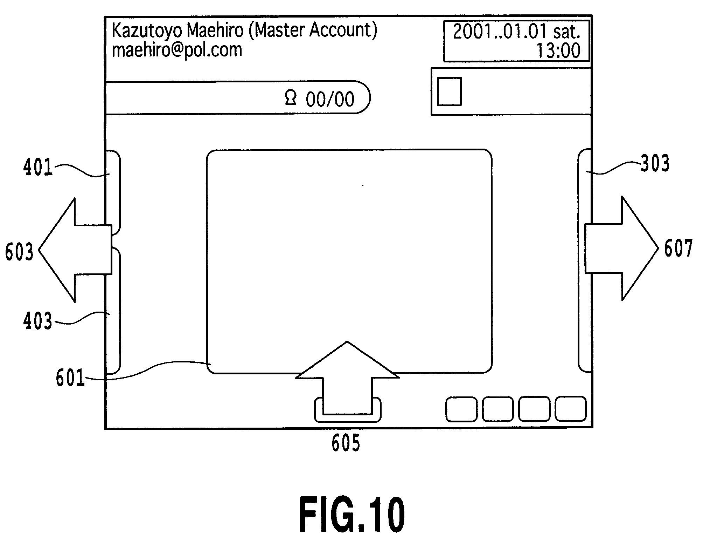

Fig. 10 shows an example of the screen of message input menu server. In this figure, an example of the display control is illustrated. That is, the information window 401 and the subcommand window 403 are scrolled out of the screen in the direction of the arrow 603, the pool window 303 is also scrolled out of the screen in the direction of the arrow 607, and simultaneously the message window 601 is scrolled into the screen in the direction of the arrow 605.

The user inputs message to be sent to the pooled members in the message window 601 through an input device 213 such as a keyboard (at step S9021). If the message is entered in the user terminal, the message is sent to the addresses registered in the pool list through the message server (step S9023).

Any means for communications known in the art, such as e-mail, may be used in the process of sending a message in accordance with the present embodiment. In the case of sending a message from the general personal computer 104a to the video game machine 103a by means of e-mail, the personal computer 104a sends the information including the member name of the video game machine 103a and the contents of the message to the message server 113 having a message-accumulation device (not shown) through the Internet 101.

The message server 113 stores the contents of the message in a receiver's message box that is defined in the message accumulation device. Simultaneously, the message server 113 determines the destinations with reference to the member name of the video game machine 103a contained in the message and then sends a message-incoming signal to the destination. If the video game machine 103a receives such a signal, then the video game machine 103a displays that the mail has delivered.

The member on the receiving side who finds such information is able to read the information accumulated in the message-accumulation device.

Therefore, the procedure described above allows the user to distribute the message to a group of other members by only activating the sending button 409, so that the load on the network can be minimized.

If the user pushes the delete button 411 in the subcommand window 403 (i.e., the process proceeds from step S9009 to step S9015 via a "YES" route in Fig. 3), the pool window 303 becomes active so that the user may select the member represented on the pool window 303. If one membership information is selected, a warning window appears on the display to make sure that the selected membership information will be deleted. After confirmation, the selected membership information in the pool is deleted (step S9015).

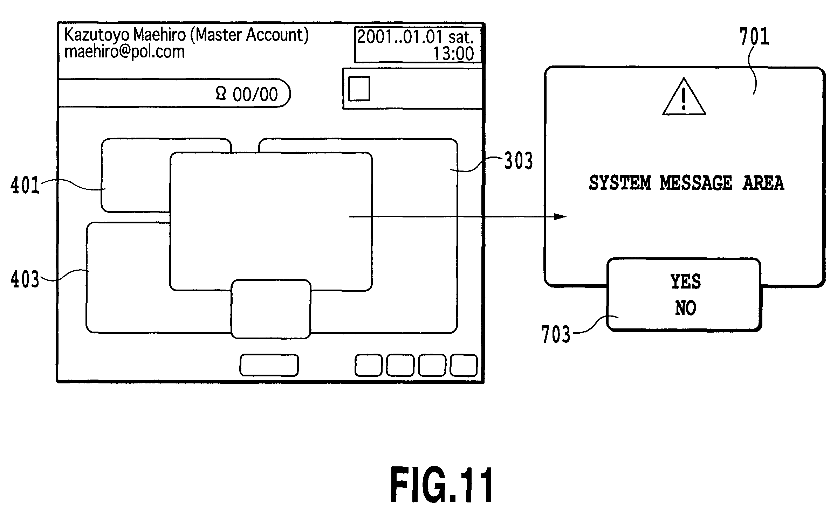

Fig. 11 shows an example of the warning window displayed on the display. The warning window 701 and a window of alternative items 703 for selecting "Yes" or "No" appear on the screen. As shown in the figure, these windows 701 and 703 are overlaid on the information window 401, the subcommand window 403, and the pool window 303 of the subcommand entry screen. Simultaneously, the background image included of the windows 401, 403 and 303 is displayed as a halftone image, so that input into these windows becomes impossible. As a result, the input is only possible from the alternative items on the window 703.

If the user clicks the "Yes" button in the alternative items window 703, then the selected user is deleted from the pool list (at step S9015).

If the user clicks the addition button 413 in the subcommand window 403 (i.e., the process proceeds from step S9011 to step S9017 via a "YES" route in Fig. 3), the warning window 701 and the alternative items window 703 are displayed in the system message area with a message. Such a message may be "the user named [***] will be pooled. You can send messages at this time to the pooled member. Do you want to pool [***]?" are displayed on the screen. If the user clicks the "Yes" button on the window 703, then the member information concerned about the selected member is added on the pool list that is temporarily assigned in the storage device of the user terminal. Subsequently, the above message is changed to another message "It is pooled." (at step S9017).

If the user clicks the release button 415 on the subcommand window 403, the warning window 701 and the alternative items window 703 are displayed in the system message area. Such a message may be "All of the pooled members will be released. The release results in no pooled member at all. Do you want to release?" If the user selects "Yes" in the screen image, the pool is released by releasing the areas temporary assigned in the storage device 217 (at step of "S9019".

If any button in the subcommand window 403 described above is not selected, for example if the representation of the subcommand entry menu is canceled, all steps in the process are terminated. If the user selects "No" in the alternative items window 703, it is returned to the subcommand entry menu screen.

### (Second Preferred Embodiment)

In this embodiment, like an address book of the prior art, a user list previously prepared by the user is used and a temporary user list is prepared by pooling some of users in the user list.

At first, the user starts a mail software application at the user terminal, and then opens a user list of the address book or the like attached on such an application by predetermined procedure.

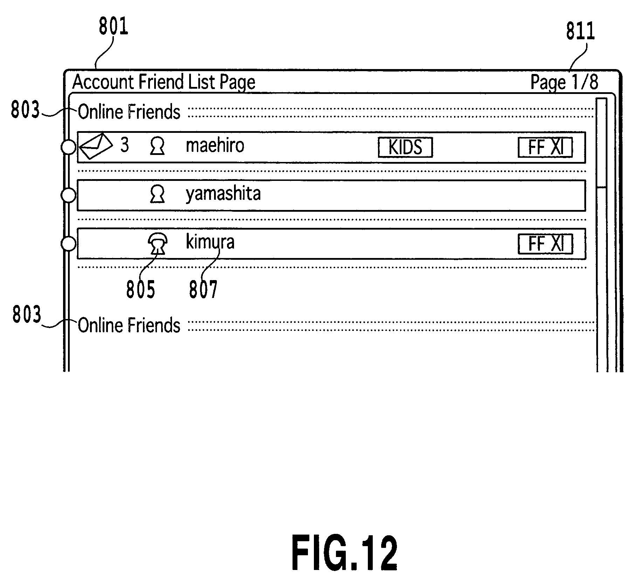

Fig. 12 shows an example of the user list prepared by the user and displayed on a display device of the user terminal. The user list includes a page status 801 that indicates the contents of the page represented on the screen, a separator 803 in which the users are divided into several groups to indicate where each user is grouped, icons 805 with their respective shapes by which the online status of each user can be recognized, user names 807, and a page number 811 that shows the serial number of pages. The icon 805 changes its shape for each online status, for example "online" (being connected on the network), "capturing" (transferring received data into a file for archiving or later analysis), and "offline" (being disconnected from the network). The user name 807 represents a user name of the retrieved member.

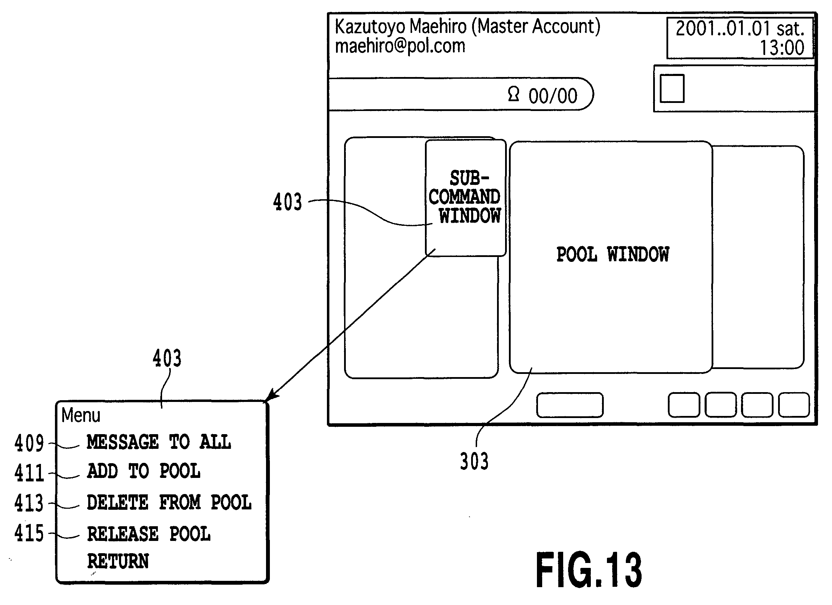

If the user puts cursor on "Friend" on the user list to activate, as shown in Fig. 13, the pool window 303 for pooling the user and the subcommand window 403 for accepting the entry of the user pool or the like are represented so that they overlay the user list screen. The user selects the desired process from the images on the subcommand window 403 to perform the process with respect to the user pool just as in the case of the above embodiment.

Having described our invention as related to the preferred embodiments shown in the accompanying drawings, it is our intention that the present invention is not limited by any of the details of description, unless otherwise specified. Rather the present invention should be constructed broadly within its spirit and scope as set out in the accompanying claims.

For example, the following embodiments are also contemplated.
(1) In the above embodiments, the pool windows or the like are prepared at the user terminal on the basis of the data received from the profile server. Alternatively, it is also possible to prepare the data for representing various kinds of windows by a page description language such as an extensible markup language (XML) in the profile server. In this case, the user terminal performs the window-displaying procedure on the basis of the page description language received from the profile server.
(2) In the above procedure for including the retrieval requests, the user terminal may previously store a group of the retrieval conditions. Thus, the desired retrieval condition may be selected from them at the time of the retrieval request and sent to the profile server. In this case, for example, a group of retrieval conditions is displayed on the display device of the user terminals to offer the acceptance of selecting the desired condition, and then the user selects a desired condition using an input means in response to the acceptance. The user terminal accepting such a selection sends a character string that corresponds to the input condition.
   In addition, the profile server may previously store a group of retrieval conditions and send screen-displaying data for the selection of retrieval conditions in response to the retrieval request from the user terminal to accept the selection of the retrieval conditions.
(3) In the above embodiment, the message window may be provided as a page on which characters are simply typed as a text editor, or provided as a page of an input menu screen having several fields such as "When", "Where" , "Who" , and "What to do" to urge the user to fill in the fields.

According to the present invention, one or more computer programs may be used on a computer system having a processor unit that is coupled to a recording device, an input device, and an output device so that the processor receives data and commands from these devices and also sends data and commands to them. These computer programs may stay described by a high-level programming language or an object-oriented programming language, assembly language, or machine language.

Thus, the processor unit may receive the computer programs from those recording media. Recording media for substantially incorporating commands from any computer program to be used in the processor unit may include semiconductor memory devices such as EPROM, EEPROM, and flash memory devices, an internal hard disk, and removable recording media such as magnetic disks, CD-R (compact disc-recordable), and CD-R/E (compact disc-recordable and erasable).

The present invention has been described in detail with respect to preferred embodiments, and it will now be apparent from the foregoing to those skilled in the art that changes and modifications may be made without departing from the invention in its broader aspect, and it is the intention, therefore, in the appended claims to cover all such changes and modifications as fall within the true spirit of the invention.

## Claims

1. A membership information retrieval server for retrieving membership information by accepting at least one retrieval condition from a group of user terminals, **characterized by** comprising:
a storage device for receiving the membership information from a group of users and storing the membership information therein;
a retrieval system that extracts selected membership information from the storage device on the basis of the at least one retrieval condition sent from one of the user terminals; and
a communications system that sends the membership information extracted by the retrieval system to the user terminal from which the at least one retrieval condition are sent.

2. The membership information retrieval server as claimed in claim 1, further **characterized by** comprising:
a determination system that determines whether each of the group of the user terminals is currently online, wherein
the communications server imports the determination results into the membership information and then sends the membership information to the user terminal.

3. The membership information retrieval server as claimed in claim 2, **characterized in that**
the membership information includes a user name of the member and information entered into and sent from the user terminal.

4. The membership information retrieval server as claimed in claim 2, **characterized in that**
the information sent to the retrieval server includes text information.

5. The membership information retrieval server as claimed in claim 2, **characterized in that**
membership information stored in the storage device can be updated whenever necessary from the user terminal being online.

6. The membership information retrieval server as claimed in claim 1, **characterized in that**
the membership information includes a user name of the member and information entered into and sent from the user terminal.

7. The membership information retrieval server as claimed in claim 6, **characterized in that**
the information sent to the retrieval server includes text information.

8. The membership information retrieval server as claimed in claim 6, **characterized in that**
membership information stored in the storage device can be updated whenever necessary from the user terminal being online.

9. The membership information retrieval server as claimed in claim 1, **characterized in that**
the information sent to the retrieval server includes text information.

10. The membership information retrieval server as claimed in claim 1, **characterized in that**
the at least one retrieval condition include a character string and the retrieval system extracts membership information on the basis of the character string and the text information included in the membership information.

11. The membership information retrieval server as claimed in claim 9, **characterized in that**
the membership information store in the storage device can be updated whenever necessary from the user terminal being online.

12. The membership information retrieval server as claimed in Claim 1, **characterized in that**
the membership information store in the storage device can be updated whenever necessary from the user terminal being online.

13. A user terminal capable of accessing the membership information retrieval server as claimed in claim 1, **characterized by** comprising:
a first sending system that enters at least one retrieval condition and sends the at least one retrieval condition to the retrieval server,
a display that displays the membership information sent from the retrieval server;
a creation system that accepts the selection of at least one member from the members in the membership information displayed by the display and creates a temporary user list that includes membership information about at least one selected member;
a first acceptance system that accepts entry of message to be sent to a user terminal to be used by at least one member listed in the temporary user list; and
a second sending system that sends the message accepted by the first acceptance system to the user terminal.

14. A message sending terminal, **characterized by** comprising:
first creation system that creates a first user list that includes membership information with respect to a group of members;
a second creation system that displays one or more members included in the first user list, accepts the selection of at least one member from the members in the first user list, and creates a second user list that includes membership information about at least one selected member;
an acceptance system that accepts the entry of a message from an input system; and
a sending system that sends the message to at least one user terminal to be used by at least one selected member in the second user list.

15. A method for sending a message, **characterized by** comprising:
receiving membership information about members sent from a group of user terminals by a server and storing the membership information in a storage device in the server;
sending at least one retrieval condition to the server from one of the group of user terminals;
extracting selected membership information from the storage device on the basis of the at least one retrieval condition by the server and sending the extracted membership information to the user terminal that sent the at least one retrieval condition;
displaying the membership information sent from the server on a display of the user terminal, accepting the selection of one or more members included in the displayed membership information to create a temporary user list that includes the membership information about the one or more accepted members; and
sending a message entered in the user terminal to the one or more members in the created temporary user list.

16. A method for retrieving membership information by accepting at least one retrieval condition from a group of user terminals, **characterized by** comprising:
receiving membership information about members sent from a group of user terminals and storing the membership information in a storage device in the server;
extracting the stored membership information on the basis of the at least one retrieval condition sent from one of the group of the user terminals; and
sending the extracted membership information from the server to the user terminals that sent the at least one retrieval condition.

17. The method for retrieving membership information as claimed in claim 16, further **characterized by** comprising:
determining whether each of the group of user terminals is online, wherein
the server sends the membership information and the determination results.

18. The method for retrieving membership information as claimed in claim 17, **characterized in that**
the membership information includes a user name of the member and the information that is entered into and sent from the user terminals.

19. The method for retrieving membership information as claimed in claim 17, **characterized in that**
the sending information includes text information.

20. The method for retrieving membership information as claimed in claim 17, **characterized in that**
the membership information to be stored in the storage device can be updated whenever necessary from the user terminal being online.

21. The method for retrieving membership information as claimed in claim 17, **characterized in that**
the membership information of the member includes a user name of the member and information that is entered into and sent from the user terminals.

22. The method for retrieving membership information as claimed in claim 21, **characterized in that**
the sending information includes text.

23. The method for retrieving membership information as claimed in claim 21, **characterized in that**
the membership information to be stored in the storage device can be updated whenever necessary from the user terminal being online.

24. The method for retrieving membership information as claimed in claim 17, **characterized in that**
the sending information includes text.

25. The method for retrieving membership information as claimed in claim 24, **characterized in that**
the at least one retrieval condition include a character string and the server extracts membership information on the basis of the character string and the text information included in the membership information.

26. The method for retrieving membership information as claimed in claim 24, **characterized in that**
the membership information to be stored in the storage device can be updated whenever necessary from the user terminal being online.

27. The method for retrieving membership information as claimed in claim 16, **characterized in that**
the membership information of the member includes a user name of the member and information that is entered in the user terminals and sent from the user terminals to the retrieval server.

28. The method for retrieving membership information as claimed in claim 17, further **characterized by** comprising:
sending the at least one retrieval condition entered by the input system to the retrieval server,
displaying the membership information sent from the retrieval server on a display;
accepting the selection of at least one member from the members in the displayed membership information on the display and creating a temporary user list that includes membership information about at least one selected member;
accepting entry of a message to be sent to a user terminal to be used by at least one member listed in the temporary user list; and
sending the accepted message.

29. A method for sending a message, **characterized by** comprising:
creating a first user list that includes membership information with respect to a group of members;
displaying one or more members included in the first created user list, accepting the selection of at least one member from the members in the first user list, creating a second user list that includes membership information about at least one selected member;
accepting entry of message from input; and
sending the accepted message to at least one user terminal to be used by at least one selected member in the second user list.

30. A recording medium, **characterized by** comprising a readable program being stored thereof, wherein the program is capable of executing:
receiving membership information about members sent from a group of user terminals to store in a storage device of a server;
sending at least one retrieval condition to the server from one of the group of user terminals;
extracting selected membership information from the storage device on the basis of the at least one retrieval condition by the server and sending the extracted membership information to the user terminal that sent the at least one retrieval condition;
displaying the membership information sent from the server on displays of the user terminals, accepting selection of one or more members included in the displayed membership information to create a temporary user list that includes the membership information about the one or more accepted members; and
sending a message entered in the user terminal to the one or more members in the created temporary user list.

31. A computer program for bring a server into operation based on a method that comprises:
receiving membership information about members sent from a group of user terminals to store in a storage device of a server;
sending at least one retrieval condition to the server from one of the group of user terminals;
extracting selected membership information from the storage device on the basis of the at least one retrieval condition by the server and sending the extracted membership information to the user terminal that sent the at least one retrieval condition;
displaying the membership information sent from the server on displays of the user terminals, accepting selection of one or more members included in the displayed membership information to create a temporary user list that includes the membership information about the one or more accepted members; and
sending a message entered in the user terminal to the one or more members in the created temporary user list.

32. A computer messaging method comprising providing a user interface which allows a user to select parties from a set to form a temporary pool; and addressing a message to said temporary pool.
